# EUROPEAN PATENT APPLICATION

(11) **EP 3 012 794 A1**
(43) Date of publication of application: **27.04.2016**
(21) Application number: 14189776.9
(22) Date of filing: 21.10.2014
(51) Int. Cl.: G06Q 30/02

(54) **Managing a passenger train**

(71) Applicant: Atos IT Solutions and Services Limited, London NW1 3HG (GB)
(72) Inventor: Dean, Yusuf, London, W13 9SR (GB); Plant, Alison, London, SW18 2SH (GB); Guzzetta-King, Hannah, London, SE3 8QJ (GB); Cockerill, Steve, Oxfordshire, OX17 EX (GB); Elliott, Simon, Surrey, GU6 8RL (GB)
(74) Representative: Patentanwaltskanzlei WILHELM & BECK

(57) **Abstract**

On a passenger train there are several passengers who can send messages to a social media service. A method for operating the passenger train comprises steps of retrieving the messages, determining, from contents of the messages, a degree of contentment of the passengers, determining performance of a technical service brought to the passengers and relating the determined degree with the determined performance.

## Description

Present invention concerns a technique for operating a passenger train. More specifically, present invention concerns a technique for improving the task of passenger transportation on the train. A passenger on a train may experience the train as comfortable or uncomfortable, depending on various factors. Some of the factors are purely related to the transportation itself, i.e. timeliness of the train, transportation speed and pricing. Passenger's satisfaction may also depend on the services that are offered to the passengers on board of the train. For instance, functionality of an air-conditioning system, service quality of a WiFi internet connection or the availability of refreshments may influence the way the passenger experiences his or her ride.

However, different passengers may experience the same technical service aboard a train in different manners. What may lead one passenger to be upset about service quality may be irrelevant to another passenger. It is a task of present invention to provide an automated mechanism to capture of customer sentiment in relation to a specific passenger journey as it occurs and provide such information in a way that permits appropriate interventions to improve the journey experience.

The invention solves these tasks by a method, a computer program product and a control unit according to the enclosed independent claims. The dependent claims indicate advantageous embodiments.

On a passenger train, there are several passengers who can send messages to a social media service. A method for operating the passenger train comprises steps of retrieving the messages, determining, from contents of the messages, the degree of contentment of the passengers, determining performance of a technical service brought to the passengers and relating the determined degree with the determined performance.

It is assumed that at least some of the messages that the passengers send to the social media service relate to the quality of at least one technical service aboard the train. Such technical services may comprise passenger transportation itself, but also additional services, especially the kind which enable a comfortable stay on the train. By processing the messages, it can be found out when passengers aboard the train tend to be more or less content. This contentment is expressed by a degree and the degree is related to the performance of at least one technical service. On the basis of such relationship, a determination how the service can be improved and the degree of contentedness can be raised may be eased. In one option, a measure for doing so can be selected from a list of possible measures.

The relationship shows if and by what degree a performance of the technical services influences the contentment of the passengers. This makes it easier to identify a situation in which a technical service aboard a passenger train may be improved in order to raise overall contentment of the passengers. Given the determined relationship, it may also be easier to judge if costs for improving the service will be justified or not. For instance, should there be a strong correlation between a slightly malfunctioning technical service and slightly discontent passengers while the costs for improving the performance of the technical service is extremely high, passenger contentment may be improved independently from the technical service in question, i.e. by offering public apology or free refreshments. The service itself may be scheduled for long-term improvement in parallel.

In one embodiment, the technical service is controlled to yield improved performance. Manipulation of the technical service may be a direct and automatic consequence of the determined relationship. This may particularly be true when the degree of contentment of the passengers is lower than a predetermined standard level. According to another embodiment, only suggestions for controlling the technical service are made.

It is preferred that there be a plurality of technical services, wherein it is determined what influence on the degree of contentment each technical service has. A correlation or relationship between the performance of each of the technical services and the degree of contentment of the passengers may thus be determined. This allows for selecting a technical service which preferably greatly influences the degree of contentment and focuses on the improvement of performance of that service. For instance, there may be a strong relationship between the performance of a heating system aboard the passenger train and the degree of contentment of the passengers while a relationship between the quality of an internet connection may be coupled only loosely to the degree of passenger contentment. If there are limited resources which can be used for improving the technical services, the service with the greatest effect on the degree of contentment may be more easily identified.

In one option, the degree of contentment is determined on the basis of individual passenger contentment and individual weighting factors. Each passenger may be assigned a weighting factor. Preferred guests, frequent travellers or first-class travellers may be assigned a higher weighting factor than an occasional passenger. Customer information which may be gathered e.g. during a ticket purchasing process may thus be re-used in order to determine the significance of the mood of each passenger. This may help creating a bond between the passenger and the provider of the train transportation service. The above-described method may help to pick up direct feedback and provide direct and possibly automatic response.

It is furthermore preferred that the individual weighting factors be determined on the basis of historical user behaviour data. In this manner, the importance of a passenger message may better be evaluated. Differences in standard behaviour between different passengers may be accounted for. For instance, a known tendency of a certain user towards use of strong language or frequent messages to the social media service may lower the weighting factor of that specific passenger.

According to another embodiment, performance of the technical service is determined on the basis of system data concerning a plurality of passenger trains. Factors which influence all of the passenger trains may thus be accounted for. The significance of each message may be adjusted in accordance with other messages. This way it may be determined which train to give priority or right of way over which other train so that the overall degree of contentedness of passengers on all trains is levelled.

It is preferred that the messages comprise texts wherein determining the degree of contentment comprises a semantic analysis of the text messages. In this way, a personal message may be differentiated from a message which relates to a technical service aboard the passenger train.

In another embodiment, the messages comprise text and determining the degree of contentment comprises a search for keywords, wherein the keywords are associated to a technical service. Each keyword may be associated to one or several technical services. This may help to identify a technical service which is related to the contentment of the passengers. It may also help to identify which technical service may be improved in order to improve a degree of contentment of the passengers.

According to yet another embodiment, for each technical service an effort for improving its performance by a predetermined degree is determined and it is determined by which improvements to technical services the degree of contentment can be improved to a predetermined level or by a predetermined amount with the least effort.

This may help identify how the degree of contentment can be raised with the least effort. This may help to find a realistic answer to determined customer dissatisfaction in the shape of a low degree of contentment.

A computer-program product comprises program code means for executing the described method when the computer-program product runs on a processing unit or is stored on a computer-readable medium.

A control unit for operating a passenger train comprises a reception unit for retrieving messages sent by passengers on the train to a social media service, a processing unit for determining, from contents of the messages, a degree of contentment of the passengers and determination means for determining performance of a technical services offered to the passengers, wherein the processing unit is configured to relate the determined degree with the determined performance.

The control unit may advantageously be used to provide the best possible service to passengers on a passenger train.

The invention will now be explained in more detail making reference to the enclosed drawings in which
- Fig. 1: shows a system with a train and a control unit;
- Fig. 2: shows an overview over the system of Fig. 1 with several trains and
- Fig. 3: shows a flow chart for an exemplary method for data gathering and processing.

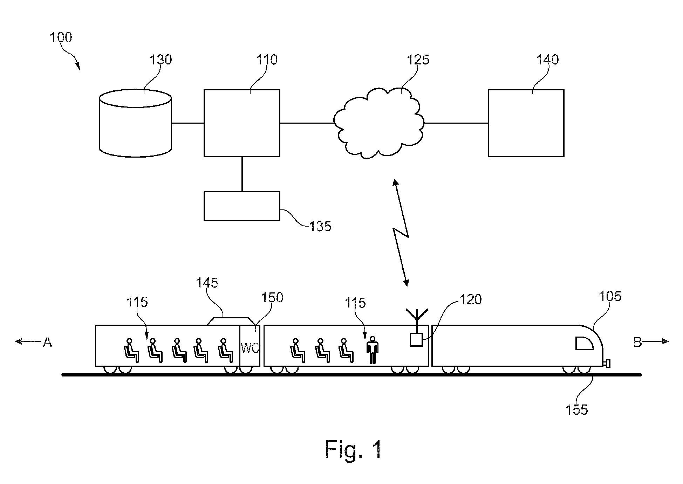

Figure 1 shows a system 100 with a train 105 and a control unit 110. The train 105 is a passenger train carrying a plurality of passengers 115 from a starting point A to a destination point B. Aboard the train 105, the passengers 115 may use an internet service. The internet service comprises a networking node 120 which is preferred to offer wireless data communication to a mobile appliance a passenger 115 may bring along. The networking node 120 provides another connection to an outside of the train 105 wherein the second connection is preferably wireless, as well. For this outside connection, proprietary hardware such as repeaters, base stations or other may be required. Such hardware may be operated by the operating company that also operates the train 105. In effect, the networking node 120 is connected to a public network 125, such as the internet. Traffic that goes into or comes out of the train 105 may be run through a control unit 110. The control unit 110 is preferably connected to at least one of a data base 130 and determination means 135 which will both be described in more detail below. Especially traffic between the train 105 and a social media service 140 may thus be examined. In another embodiment, the control unit 110 subscribes content from the social media service 140 so that information posted from the train 105 is available at the control unit 110.

A passenger 115 aboard the train 105 is subject not only to the transporting function of train 105, but also to one or more technical services. Examples for such services comprise an air conditioning 145, sanitation 150 or networking via the networking node 120. The technical services may each deliver a certain performance which may be monitored with determination means 135. The determination means 135 may also and chiefly be configured to monitor quality of the transportation service of the train 105, that is, if the train 105 reaches stations on a network of lines 155 on time as defined in a timetable.

As it is the custom, a passenger 115 may decide to publish her or his personal momentary mood via the social media service 140. A corresponding message may comprise text and the media service 140 may comprise a platform like Twitter. The message from the passenger 115 is conveyed over networking node 120 to the social media service 140, but also ends up at the control unit 110. The control unit 110 analyses the message and determines if the message is from a content passenger 115 or a discontent passenger 115. By examining a plurality of messages from a plurality of passengers 115 on the same train 105, the data thus determined may be used for determining a degree of contentment of all passengers 115 aboard the train 105.

It is preferred that for determining the degree of contentment of the passengers 115, information related to the passenger 115 who sent a specific message be also considered. Such information may be derived from database 130 and may for instance comprise a communication history of the passenger 115. It may also comprise a passenger status such as a casual passenger, a frequent passenger, a preferred passenger or a Very Important Person. Also, habits, language and other information related to the person who sent a message in questions may be used.

The message is preferred to be analyzed with a text analysis tool. A relevance of the overall message with transportation of the passenger 115 on the train 105 may be evaluated. Only if the relationship is apparent, further processing may be applied. The processing may comprise a search for keywords wherein the keywords are associated to one or more technical services aboard the train 105. If a word that relates to a specific service such as the air conditioning 145 is found inside of the message in question the information that a specific contentment or discontentment - depending on the rest of the message - is determined rather than a general contentment and discontentment. The message may be saved for further processing, especially for a customer desk or the like.

Results from processed messages from a plurality of passengers 115 to one or more social media services 140 are then related to a performance of one or more technical services aboard the train 105. This makes sure that an attempt to raise contentment of the passengers 115 aboard the train 105 by improving performance of one of the technical services is only made if there is an indication that the discontentment is related to one of the technical services.

However, in other embodiments, a discontentment deriving from a different source, say, the weather, which is not suggestible by an authority responsible for the train 105 or the line 155 may still lead to an attempt to raise contentment by improving performance of one of the technical services. For instance, one of the technical services may comprise the dispensing of free hot or cold beverages. A corresponding announcement may be made throughout the train 105.

In another embodiment, performance of all technical services is determined along with a cost for increasing said performance in order to find the best technical means for increasing overall technical performance aboard the train 105 to the passengers 115 in case of a low degree of contentment, this information may be used for determining the biggest effect on the contentment of the passengers 115 with a limited effort.

For example, the following table shows for different technical services aboard or connected to the train 105, each one complete with a performance index and costs for increasing said performance by one index point. The performance index is chosen such that ordinary performance that may be considered good has an index of zero; a larger index hints at an exceptionally good performance while a lower index hints at a bad performance. The costs in the table are given in fictitious units just for relative comparison.

| service | performance | cost for +1 performance |
|---|---|---|
| transportation | -1 | 100 |
| air conditioning | -3 | 10 |
| sanitation | +1 | 40 |
| networking | 0 | 500 |

In the above example, transportation may have a performance index of -1 because the train 105 is delayed by a few minutes. Driving the train faster may be possible at increased energy costs. The air conditioning 145 aboard the train is clearly performing badly with a performance index of -3. Setting the air conditioning 145 to a higher level of warming or cooling will also cause energy costs, but these are much lower than the costs of accelerating the train 105. Sanitation 150 is performing well with an index of +1. Increasing performance from there may be difficult so that costs of 40 are given. Networking via the networking node 120 may have a normal performance. Increasing the performance, i.e. increasing the bandwidth between the public network 125 and the networking node 120 may be a major infrastructure project which must be planned in a long-term manner. Accordingly, costs for improving networking performance are given as 500.

If all technical services have the same weighting, increasing performance of one service by one index point may yield an increase in the degree of contentment of the passengers 115 by one index point, as well. In order to increase the degree of contentment by one index point in the above-given example, it is preferred to control the air conditioning 145 to increase performance as it causes the least costs. However, only a limited number of index points may be gained by controlling the air conditioning. Once a perfect temperature has been reached inside of the train 105, no further increasing may be possible by controlling the air conditioning 145. Also, the above table may only be true for the first index point to gain, successive index points may be related to higher or lower costs.

In one embodiment of the invention, it is determined which of the technical services provided to the passengers 115 on board of the train 105 may be controlled in which way in order to increase the degree of contentment of the passengers 115 by a given amount or to a given level, thereby causing the least possible costs. In one embodiment, the technical services have different weighting so that investment of a certain cost for controlling a particular service for increased performance may have a bigger or smaller impact on the degree of contentment.

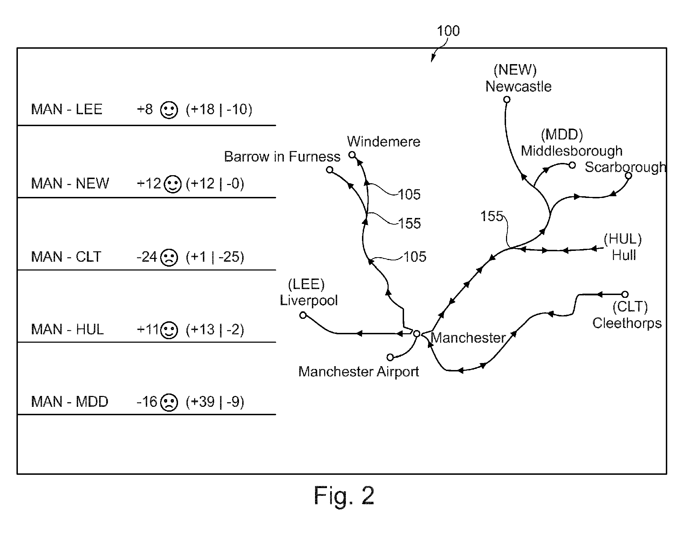

Figure 2 shows an overview over the system 100 of Figure 1 with several trains 105. By way of example, the line system 155 used in the example of Figure 1 comprises a part of England. On the right-hand side of Figure 2, a network map is shown. Each little arrow denotes one train 105. On the left-hand side, exemplary degrees of contentment of passengers 115 aboard some selected trains 105 are given. Combinations of three letters each stand for an individual train station. Each start point A and destination point B is given by one three-letter combination. Next to it, in the same line, an exemplary degree of contentment is indicated. This degree is evaluated to a smiley right next to it. Following that, in brackets is a number of received messages that hint at a content passenger 115, followed by '|' and a second number of messages that hint at a discontent passenger 115. In the first line, a train from Manchester (MAN) to Liverpool (LEE), eighteen passengers 115 appear to be content, while ten appear to be discontent. As a result, said train 105 has a degree of contentment of +8.

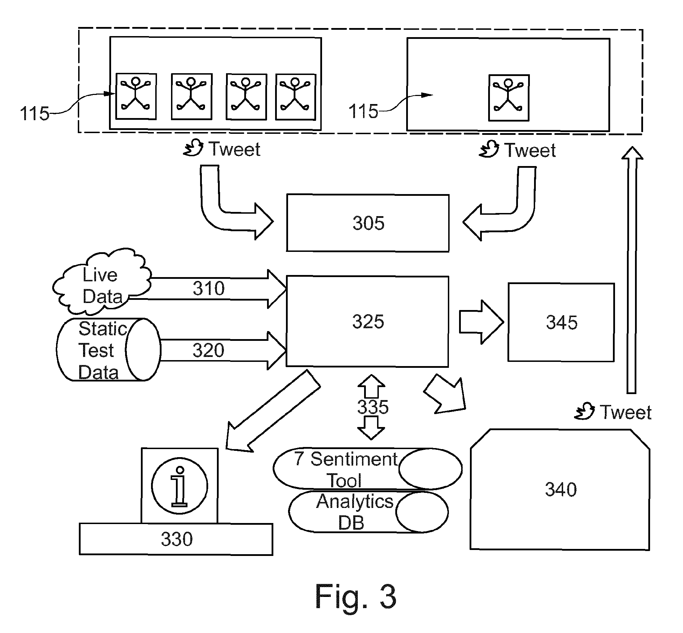

Figure 3 shows a flow chart of an exemplary method for data gathering and processing, to be executed by control unit 110 of the system 100 in Figure 1. In a first step 305, messages from passengers 115 are collected and assigned with additional information. Such additional information may particularly comprise a geographic location of the sender so that it can be determined aboard which train 105 the sender is (if any). Other passengers 115 may have an unknown geographical location. Messages from those passengers 115 may still be processable.

In a second step 310, technical service data is collected from determination means 135. It is preferred that the data are real-time data or near-real-time data. Such information may comprise a travelling speed or a position of the train 105. In a step 320, static data may be imported. Static data my comprise information like desired operational parameters or a timetable. This is also the preferred way of providing test data, particularly when live data is unavailable. In a step 325, the collected information is processed and relationships are determined.

Results from this step may be displayed in a successive step 330. An analysis for sentiment of the sender of the message is done in a step 335. This determination is preferred to take place on the basis of an analytics database, especially for semantic processing.

It may also be determined that some of the messages are forwarded for further examination inside or outside of the train 105 in a step 340. A technical action may be advised or controlled on the basis of the processing in step 325 in a step 345.

### List of reference numerals

- 100: system
- 105: train
- 110: control unit
- 115: passenger
- 120: networking node
- 125: public network
- 130: database
- 135: determination means
- 140: social media service
- 145: air conditioning
- 150: sanitation
- 155: line system

- 305: collect, tag and sort messages
- 310: near real time import
- 315: offline batch load
- 320: import static data
- 325: process, determine relationships
- 330: display results
- 335: determine sentiment
- 340: determine which messages to forward to staff
- 345: technical action

## Claims

1. Method for operating a passenger train, wherein the method comprises steps of:
- retrieving messages sent by passengers on the train to a social media service;
- determining, from contents of the messages, a degree of contentment of the passengers;
- determining performance of a technical service brought to the passengers and
- relating the determined degree with the determined performance.

2. Method according to claim 1, wherein the technical service is controlled to yield improved performance.

3. Method according to claim 1 or 2, wherein there is a plurality of technical services and it is determined what influence on the degree of contentment each technical service has.

4. Method according to one of the preceding claims, wherein the degree of contentment is determined on the basis of individual passenger contentment and individual weighting factors.

5. Method according to claim 4, wherein the individual weighting factors are determined on the basis of historical user behaviour data.

6. Method according to one of the preceding claims, wherein performance of the technical service is determined on the basis of system data concerning a plurality of passenger trains.

7. Method according to one of the preceding claims, wherein the messages comprise texts and determining the degree of contentment comprises a semantic analysis of the text messages.

8. Method according to one of the preceding claims, wherein the messages comprise texts and determining the degree of contentment comprises a search for keywords, the keywords being associated to a technical service.

9. Method according to one of the preceding claims, wherein
- for each technical service, an effort for improving its performance by a predetermined degree is determined, and
- it is determined by which improvements to technical services the degree of contentment can be improved to a predetermined level with the least effort.

10. Computer program product comprising program code means for executing the method according to one of the preceding claims when the computer program product runs on a processing unit or is stored on a computer readable medium.

11. Control unit for operating a passenger train, the unit comprising:
- a reception unit for retrieving messages sent by passengers on the train to a social media service;
- a processing unit for determining, from contents of the messages, a degree of contentment of the passengers and
- determination means for determining performance of a technical service brought to the passengers;
- wherein the processing unit is configured to relate the determined degree with the determined performance.
